# EUROPEAN PATENT SPECIFICATION

(11) **EP 2 023 332 B1**
(45) Date of publication and mention of the grant of the patent: **12.06.2019**
(21) Application number: 08153680.7
(22) Date of filing: 29.03.2008
(51) Int. Cl.: G09G 5/00

(54) **Display apparatus and control method thereof**
Anzeigevorrichtung und Verfahren zu ihrer Ansteuerung
Appareil d'affichage et son procédé de commande

(30) Priority: 23.07.2007 KR 20070073635
(43) Date of publication of application: 11.02.2009
(73) Proprietor: Samsung Electronics Co., Ltd., Suwon-si, Gyeonggi-do, 443-742 (KR)
(72) Inventor: Choi, Young-hun, Gyeonggi-do (KR)
(74) Representative: Appleyard Lees IP LLP

(56) References cited:
- WO-A-2006/059868
- US-A1- 2003 214 507
- US-A1- 2004 027 357
- US-A1- 2004 027 515
- US-A1- 2004 150 650
- US-A1- 2006 036 882
- US-A1- 2006 082 569
- US-B1- 6 618 773
- DISCLOSED ANONYMOUSLY: "Display switch with dedicated extended display identification data information" RESEARCH DISCLOSURE, MASON PUBLICATIONS, HAMPSHIRE, GB, vol. 508, no. 89, 1 August 2006 (2006-08-01), page 1092, XP007136552 ISSN: 0374-4353

## Description

### BACKGROUND OF THE INVENTION

### 1. Field of Invention

Apparatuses and methods consistent with the present invention relate to a display apparatus and a control method thereof, and more particularly, to a display apparatus which transmits extended display identification data (EDID) corresponding to a connector coupled to a video signal supply source, and a control method thereof.

### 2. Related Art

A display apparatus receives a video signal from a video processing apparatus or a video signal supply source to display the video signal thereon. The related art plug and play display apparatus exchanges information with the video signal supply source. If the plug and play display apparatus is connected with the video signal supply source through a connector, the video signal supply source automatically reconfigures and optimizes a user environment with respect to the display apparatus.

To perform such a function, extended display identification data (EDID) including information on the display apparatus is stored in the display apparatus. The stored EDID is transmitted to the video signal supply source through the connector. The EDID may be transmitted to the video signal supply source according to display data channel (DDC) defined by video electronics standards association (VESA).

The related art display apparatus includes a plurality of ports to be connected with a plurality of connectors. Each port includes an electrically erasable and programmable read only memory (EEPROM) storing the EDID corresponding to each connector. If each port is connected with the corresponding connector and receives the EDID through the connector, the EDID is supplied to the video signal supply source from the EEPROM of the port through the connector.

However, the related art display apparatus should have the EEPROMs therein corresponding to the connectors, leading to increase in the number of EEPROMs. Thus, production costs may also rise, and an internal configuration of the display apparatus may become complicated.

Further, EDID should be written to the plurality of EEPROMs, respectively, during a production process. Thus, a manufacturer should change EEPROMs in every writing process, which may require additional time.

US-A-2004/0027515 teaches that in order to automatically distinguish a type of cable connected to a display apparatus, and transmit appropriate specification information to a host, when a host and a display apparatus are connected via a DVI-D to DVI-D cable for digital signal, a DDC 5V from the host is applied to an emitter of a detection transistor, and a lower voltage due to a resistor is applied to its base so that the detection transistor turns on. A collector voltage thus becomes an H level so that a multiplexer is switched to the side of a non-volatile memory in which a digital EDID is stored. When they are connected via a D-Sub to DVI-I conversion cable for analog signal, a DDC 5V terminal and an HPD terminal of the cable are short circuited, so the detection transistor turns off, the collector voltage becomes an L, and the multiplexer is switched to the non-volatile memory side in which an analog EDID is stored. This document provides basis for the pre-characterising portion of the independent claims appended hereto.

US-A-2006/0082569 discloses a method for acquiring EDID from a single memory device in an EDID compliant display controller by a host device coupled thereto by way of a requesting port. The display controller includes a processor coupled to a memory device in the form of an SPI-ROM that stores EDID, and a FIFO that holds EDID data read from ROM.

### SUMMARY OF THE INVENTION

According to the present invention there is provided a display apparatus and a method as set forth in the appended claims. Other features of the invention will be apparent from the dependent claims, and the description which follows.

The present invention provides a display apparatus which can simplify EDID management and transmission, instead of having EEPROMs storing EDID therein for each of connectors, and a control method thereof.

The present invention also provides a display apparatus which simplifies an EDID writing process of an overall manufacturing process, and a control method thereof.

When the word "embodiment" is used in the description, it should be interpreted as meaning an embodiment of the invention only when the combination of its respective features has a scope included within the scope of the appended claims.

### BRIEF DESCRIPTION OF THE DRAWINGS

The above and/or other aspects of the present invention will become apparent and more readily appreciated from the following description of the exemplary embodiments, taken in conjunction with the accompanying drawings of which:
FIG. 1 is a block diagram of a display apparatus according to an exemplary embodiment of the present invention;
FIG. 2 is a control flowchart of the display apparatus in FIG. 1 according to an exemplary embodiment of the present invention; and
FIG. 3 is a control flowchart of a display apparatus according to another exemplary embodiment of the present invention.

### DETAILED DESCRIPTION OF EXEMPLARY EMBODIMENTS OF THE INVENTION

Hereinafter, exemplary embodiments of the present invention will be described with reference to accompanying drawings, wherein like numerals refer to like elements, and repetitive descriptions will be avoided as necessary.

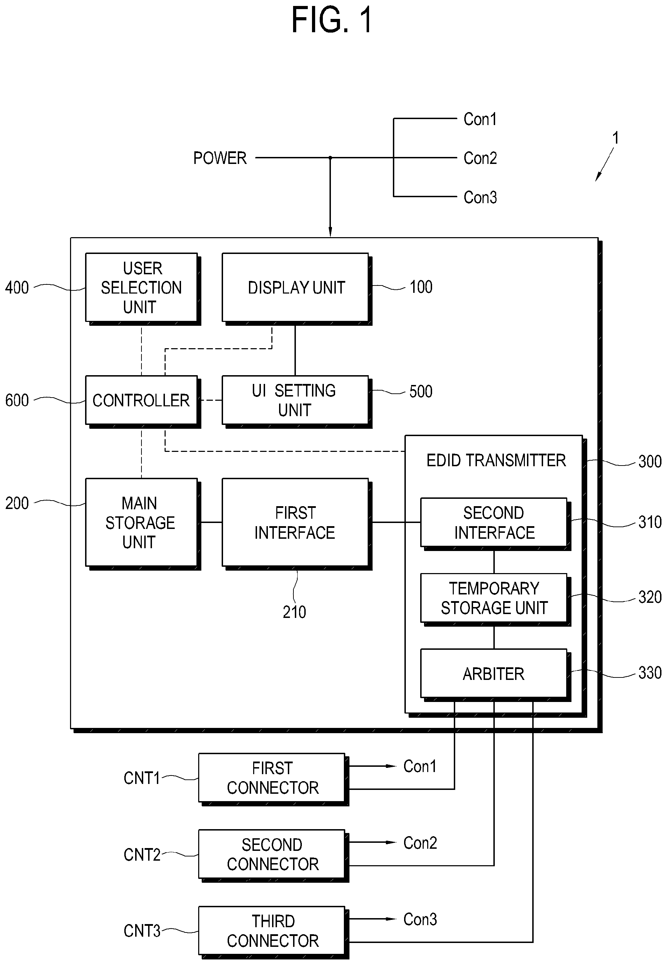

As shown in FIG. 1, a display apparatus 1 according to an exemplary embodiment is coupled to connectors CNT1, CNT2 and CNT3 which are coupled to at least one video signal supply source (not shown). The video signal supply source communicates with the display apparatus 1 through various interfaces including high definition multimedia interface (HDMI), a digital visual interface (DVI), a personal computer, or the like, but are not limited thereto. The display apparatus 1 includes a port (not shown) to which the connectors CNT1, CNT2 and CNT3 are connected, so as to communicate with the video signal supply source.

The video signal supply source receives EDID which includes information on resolution, horizontal frequency, vertical frequency, manufacturer's ID, product name and display power management signaling (DPMS) supported by the display apparatus 1 to transmit an optimal video signal that is displayable on the display apparatus 1. The EDID is stored in the display apparatus 1. If connected with the connectors CNT1, CNT2 and CNT3 and receiving an EDID requesting signal from the video signal supply source, the display apparatus 1 transmits the EDID to the video signal supply source through the connectors CNT1, CNT2 and CNT3.

The connectors CNT1, CNT2 and CNT3 may transmit the electrical signal between the video signal supply source and the display apparatus 1, and at the same time, power may be supplied from the video signal supply source to the display apparatus 1 through the connectors CNT1, CNT2 and CNT3.

The display apparatus 1 includes a display unit 100 which displays a video image thereon, a main storage unit 200 which stores various programs and data including the EDID therein, and an EDID transmitter 300 which transmits the EDID to the connectors CNT1, CNT2 and CNT3.

The EDID may be plurally provided (e.g., in parallel) corresponding to the single video signal supply source and one of the connectors CNT1, CNT2 and CNT3 coupled to the video signal supply source. In this case, the display apparatus 1 may further include a user selection unit 400 to select one of the plurality of EDID, and a user interface (UI) setting unit 500 to display a selection item on the plurality of EDID on the display unit 100.

The display apparatus 1 further includes a controller 600 which controls the foregoing elements when power is supplied. The display apparatus 1 receives power from an external power source connected therewith. Also, the display apparatus 1 may receive power from the video signal supply source through the connectors CNT1, CNT2 and CNT3 if coupled to the connectors CNT1, CNT2 and CNT3.

The display unit 100 displays an image thereon corresponding to the received video signal. The display unit 100 may employ various related art display devices such as a digital light processing (DLP) projector, a liquid crystal display (LCD) and a plasma display panel (PDP).

The display unit 100 displays the selection item on the plurality of EDID thereon by the UI setting unit 500. Then, a user may select one of the plurality of EDID through the user selection unit 400.

The main storage unit 200 stores data and driver programs therein to drive the display apparatus 1. The main storage unit 200 may include a non volatile flash ROM to store the programs and data therein even if the display apparatus 1 is turned off.

In addition to the programs and data, the main storage unit 200 stores EDID therein corresponding to the plurality of connectors CNT1, CNT2 and CNT3 connected with the display apparatus 1. If the display apparatus 1 is turned on, the EDID stored in the main storage unit 200 is loaded to the EDID transmitter 300. The main storage unit 200 includes a first interface 210 to transmit the EDID to the EDID transmitter 300.

The first interface 210 transmits the EDID stored in the main storage unit 200 to the EDID transmitter 300, specifically to a second interface 310 (as explained below). The first interface 210 may transmit the EDID to the second interface 310 according to, e.g. I2C port or RS232 port. I2C is a serial bus and a two wire interface between devices. I2C includes a serial clock (SCL) as a control line and a serial address/data (SDA) as a data line, and supports bi-directional communication between devices. RS232C is a recommended standard equipped in a PC, has a small number of wires and is easy to realize communication programming, but enables only a serial communication.

The EDID transmitter 300 is electrically coupled to the connectors CNT1, CNT2 and CNT3 connected with the display apparatus 1. If power is supplied, the EDID stored in the main storage unit 200 is loaded by the EDID transmitter 300. If the EDID requesting signal is supplied by the video signal supply source through the connectors CNT1, CNT2 and CNT3, the EDID transmitter 300 transmits the EDID corresponding to the supplied EDID requesting signal to the connectors CNT1, CNT2 and CNT3. Then, the video signal supply source performs a routine to optimize the user environment of the display apparatus 1 based on the EDID supplied through the connectors CNT1, CNT2 and CNT3.

To perform the foregoing operation, the EDID transmitter 300 includes the second interface 310 which receives the EDID from the first interface 210, a temporary storage unit 320 which stores the EDID supplied through the second interface 310 therein and an arbiter 330 which transmits the EDID stored in the temporary storage unit 320 to the respective connectors CNT1, CNT2 and CNT3 corresponding to the EDID requesting signals respectively supplied by the connectors CNT1, CNT2 and CNT3.

The second interface 310 forms an I2C port or RS232 port line together with the first interface 210, allowing the EDID to be loaded from the main storage unit 200 to the temporary storage unit 320.

The temporary storage unit 320 stores the EDID supplied through the second interface 310 therein. The temporary storage unit 320 may include a volatile random access memory (RAM) which loses data if power is turned off, but is not limited thereto. If power is turned off, the data of the temporary storage unit 320 is erased. If power is supplied, the EDID stored in the main storage unit 200 is loaded and stored in the temporary storage unit 320. Thus, the data of the temporary storage unit 320 does not need to be erased to load the EDID stored in the main storage unit 200 to the temporary storage unit 320, if power is supplied.

The temporary storage unit 320 stores the EDID corresponding to the connectors CNT1, CNT2 and CNT3 or the EDID requesting signals therefrom, per memory address. For example, it is presumed that the EDID corresponding to the respective connectors CNT1, CNT2 and CNT3 are stored in the main storage unit 200. The memory addresses from 0 to 255 of the temporary storage unit 320 store the EDID corresponding to the first connector CNT1, memory addresses from 256 to 511 store the EDID corresponding to the second connector CNT2 and the memory addresses from 512 to 767 store the EDID corresponding to the third connector CNT3. If the connectors CNT1, CNT2 and CNT3 transmit EDID requesting signals respectively, the arbiter 330 accesses the temporary storage unit 320 based on the memory addresses to transmit the EDID to the connectors CNT1, CNT2 and CNT3.

If the plurality of connectors CNT1, CNT2 and CNT3 supplies the EDID requesting signals respectively, the arbiter 330 reads the EDID from the temporary storage unit 320 and transmits the EDID to the CNT1, CNT2 and CNT3, respectively. If the EDID requesting signals are substantially simultaneously supplied, the arbiter 330 processes the signals sequentially.

The arbiter 330 accesses the EDID loaded to the temporary storage unit 320 based on the memory addresses corresponding to the supplied EDID requesting signals to improve speed and efficiency. For example, it is presumed that the second connector CNT2 transmits the EDID requesting signal to the arbiter 330. The EDID corresponding to the second connector CNT2 is stored in the memory addresses from 256 to 511 of the temporary storage unit 320. The arbiter 330 then accesses the memory addresses from 256 to 511 and transmits the EDID at the concerned memory addresses to the second connector CNT2, instead of accessing the memory addresses from zero to 511. Thus, the arbiter 330 transmits the EDID faster corresponding to the EDID requesting signals of the connectors CNT1, CNT2 and CNT2. For example, but not by way of limitation, workload may be substantially decreased.

The main storage unit 200 may store a plurality of EDID, e.g. several versions of EDID therein corresponding to one of the connectors CNT1, CNT2 and CNT3. In this case, the latest version of the plurality of EDID is automatically loaded to the temporary storage unit 320. Alternatively, a user may select from the several versions of EDID.

The user selection unit 400 is provided to select one of the selection items on the plurality of EDID displayed on the display unit 100. The user selection unit 400 may include a menu button (not shown) disposed in the display apparatus 1, or a remote controller.

The UI setting unit 500 displays the selection items on the plurality of EDID corresponding to one of the connectors CNT2, CNT2 and CNT3, on the display unit 100. A user may activate the UI setting unit 500 and select one of the displayed selection items through the user selection unit 400 as necessary.

If power is supplied to the display apparatus 1, the controller 600 reads the EDID among the data stored in the main storage unit 200, and loads the EDID to the EDID transmitter 300, specifically, to the temporary storage unit 320. The controller 600 stores the EDID corresponding to the respective connectors CNT1, CNT2 and CNT3 in the temporary storage unit 320 based on the preset memory addresses. The arbiter 330 may effectively access the temporary storage unit 320 corresponding to the EDID requesting signals.

If the EDID is plurally provided corresponding to one of the connectors CNT1, CNT2 and CNT3, the controller 600 controls the UI setting unit 500 to display the selection items on the plurality of EDID on the display unit 100. If a user selects one of the plurality of EDID through the user selection unit 400, the controller 600 registers and stores the information on the selected item in the main storage unit 200. If power is supplied to the display apparatus 1, the controller 600 selects the EDID stored in the main storage unit 200 to be loaded to the temporary storage unit 320. Then, the arbiter 330 may transmit the EDID loaded to the temporary storage unit 320, to one or more of the connectors CNT1, CNT2 and CNT3.

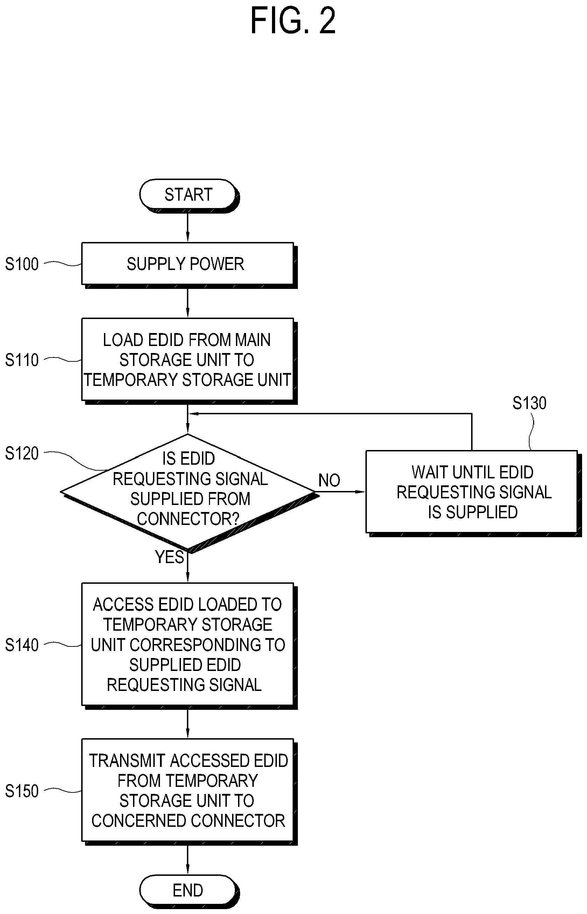

With the foregoing configuration, the process of transmitting the EDID by the display apparatus 1 according to the exemplary embodiment will be described with reference to FIGS. 1 and 2. Here, the display apparatus 1 is turned off at an initial stage.

First, power is supplied to the display apparatus 1 (S100). According to the exemplary embodiment, power is supplied to the display apparatus 1 by at least one of the following: (1) the display apparatus 1 is turned on to receive power; (2) the connectors CNT1, CNT2 and CNT3 are connected with the display apparatus 1 and supply power thereto.

If power is supplied to the display apparatus 1, elements such as the controller 600, the main storage unit 200 and the EDID transmitter 300 start operating. The controller 600 reads the EDID stored in the main storage unit 200 and loads the EDID to the temporary storage unit 320 (S110). Here, the controller 600 stores the EDID corresponding to the respective connectors CNT1, CNT2 and CNT3 in the temporary storage unit 320 based on the preset memory addresses.

The arbiter 330 receives the EDID requesting signals from the connectors CNT1, CNT2 and CNT3 (S120). If the EDID requesting signals are not transmitted, the arbiter 330 waits until receiving the signals (S130).

If the EDID requesting signals are transmitted from the connectors CNT1, CNT2 and CNT3, the arbiter 330 accesses the temporary storage unit 320 based on at least the memory addresses corresponding to the EDID requesting signals (S140). The arbiter 330 transmits the accessed EDID from the temporary storage unit 320 to the respective connectors CNT1, CNT2 and CNT3 (S150).

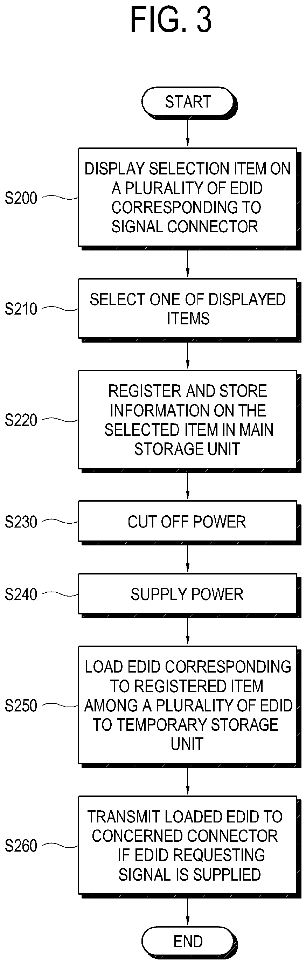

According to the exemplary embodiment, single EDID is stored in the main storage unit 200 corresponding to one of the connectors CNT1, CNT2 and CNT3. According to another exemplary embodiment, however, several versions of the EDID may be stored in the main storage unit 200 corresponding to one of the connectors CNT1, CNT2 and CNT3. Hereinafter, the process of transmitting the EDID having several versions will be described with reference to FIGS. 1 and 3. Here, the display apparatus 1 is turned on and operate at an initial stage.

If the plurality of EDID is stored in the main storage unit 200 corresponding to one of the connectors CNT1, CNT2 and CNT3, a user activates the UI setting unit 500 to display the selection items on the plurality of EDID on the display unit 100 (S200) . A user selects one of the items displayed on the display unit 100 through the user selection unit 400 (S210).

The information on the selected item is registered and stored in the main storage unit 200 according to the control of the controller 600 (S220) . At this time, the information on the EDID selected by a user is stored in the main storage unit 200 to be recognized by a user. The main storage unit 200 includes the flash ROM to write the information.

Then, the display apparatus 1 is turned off (S230). As the information on the selected EDID is stored in the non-volatile main storage unit 200, the information is not erased when the display apparatus 1 is turned off.

If power is supplied to the display apparatus 1 (S240), the controller 600 refers to the information on the selected EDID registered and stored in the main storage unit 200 before loading the EDID from the main storage unit 200 to the temporary storage unit 320. Among the plurality of EDID corresponding to one of the connectors CNT1, CNT2 and CNT3, the controller 600 loads the EDID corresponding to the item registered in the main storage unit 200, i.e. loads the EDID selected by a user, to the temporary storage unit 320 (S250).

If the EDID requesting signals are transmitted from the connectors CNT1, CNT2 and CNT3, the arbiter 330 transmits the loaded EDID to the concerned connectors CNT1, CNT2 and CNT3 (S260). This operation is substantially the same as that according to the exemplary embodiment described above.

As described above, the display apparatus 1 according to the exemplary embodiment stores the EDID in the main storage unit 200, loads the EDID from the main storage unit 200 to the temporary storage unit 320 if power is supplied, and transmits the EDID loaded to the temporary storage unit 320 to the respective connectors CNT1, CNT2 and CNT3 by the arbiter 330 corresponding to the EDID requesting signals from the connectors CNT1, CNT2 and CNT3.

The above exemplary embodiments may be embodied as a computer program that performs the described exemplary method. Code and code segments of the computer program may be easily derived by computer programmers of ordinary skill in the art to which the present invention pertains. The computer program may be stored in a computer readable medium, and executed using a general digital computer. Examples of the computer-readable medium include a magnetic recording medium (a ROM, a floppy disk, a hard disc, etc.), and an optical recording medium (a CD ROM, a DVD, etc.), but are not limited thereto.

According to the exemplary embodiments, a single memory storing EDID therein is provided, instead of plural memories corresponding to respective connectors, which might simplify an EDID transmission configuration. Further, a plurality of EDID is written in a single memory, which might simplify an EDID writing process in manufacturing processes, and might improve production efficiency. Furthermore, if a plurality of EDID is provided corresponding to a single connector, a user may select the EDID, which might affect application and product credibility. However, the foregoing affects are not necessarily, and these affects, other affects or no effects may be realized without departing from the scope of the invention.

Although a few preferred embodiments have been shown and described, it will be appreciated by those skilled in the art that various changes and modifications might be made without departing from the scope of the invention, as defined in the appended claims.

## Claims

1. A display apparatus (1), comprising:
a port arranged to be connectable to a plurality of connectors (CNT1-CNT3) which are respectively coupled to at least one video signal supply source;
a non-volatile main storage unit (200) which stores a plurality of extended display identification data, EDIDs, therein, wherein the plurality of the EDIDs respectively correspond to the plurality of connectors (CNT1-CNT3);
a volatile temporary storage unit (320); and
a controller (600),
wherein the controller (600) is configured to:
load the plurality of EDIDs from the main storage unit (200) into the temporary storage unit (320) when power is supplied to the display apparatus (1),
receive EDID requesting signals from external video signal supply sources through connectors (CNT1, CNT2) which are connected to the port among the plurality of connectors (CNT1-CNT3), and
control an arbiter (330) to transmit the EDID corresponding to the connected connectors (CNT1, CNT2) among the EDIDs loaded in the temporary storage unit (320), to the external video signal supply sources through the connected connectors (CNT1, CNT2), wherein if the EDID requesting signals are substantially simultaneously supplied, the arbiter (330) processes the signals sequentially.

2. The display apparatus (1) according to claim 1, wherein the controller (600) is adapted to receive power from at least one of the display apparatus (1) and at least one of the connectors (CNT1-CNT3).

3. The display apparatus (1) according to claim 1 or 2, wherein the pluality of EDIDs stored in the main storage unit (200) are transmitted to the temporary storage unit (320) through an interface (210, 310) including an I2C port or a RS232 port.

4. The display apparatus (1) according to any preceding claim, wherein the main storage unit (200) stores a plurality of EDID versions therein corresponding to at least one of the connectors (CNT1-CNT3), the display apparatus (1) further comprising:
a user selection unit (400) which is provided to select one of the plurality of EDID versions.

5. The display apparatus (1) according to claim 4, further comprising a user interface setting unit (500) which displays a selection item on the plurality of EDID versions to be selected through the user selection unit (400).

6. The display apparatus (1) according to claim 4 or 5, wherein the controller (600) loads the EDID version selected by the user selection unit (400) among the plurality of EDID versions corresponding to the at least one connector (CNT1-CNT3), from the main storage unit (200) to the temporary storage unit (320).

7. A control method of a display apparatus (1) having a port connectable to a plurality of connectors (CNT1-CNT3) which are respectively coupled to video signal supply sources, a non-volatile main storage unit (200) which stores a plurality of extended display identification data, EDID, of the display apparatus (1), wherein the plurality of EDIDs respectively correspond to the plurality of connectors (CNT1-CNT3), and a volatile temporary storage unit (320), the control method comprising:
loading the plurality of EDIDs from the main storage unit (200) into the temporary storage unit (320) when power is supplied to the display apparatus (1);
receiving EDID requesting signals from external video signal supply sources through connectors (CNT1, CNT2) which are coupled to the port among the plurality of connectors (CNT1-CNT3);
transmitting, by an arbiter (330), the EDIDs corresponding to the connected connectors (CNT1, CNT2) among the EDIDs loaded to the temporary storage unit (320), to the external video signal supply source through the connected connectors (CNT1, CNT2);
if the EDID requesting signals are substantially simultaneously supplied, processing the signals sequentially by the arbiter (330).

8. The control method according to claim 7, comprising receiving power from at least one of the display apparatus (1) and at least one of the connectors (CNT1-CNT3).

9. The control method according to claim 7, wherein the EDIDs stored in the main storage unit (200) are transmitted to the temporary storage unit (320) through an interface (210, 310) including an I2C port or a RS232 port.

10. The control method according to claim 7, further comprising if a plurality of EDID versions are stored in the main storage unit (200) corresponding to at least one connector (CNT1), selecting one of the plurality of EDID versions through a user selection unit (400) of the display apparatus (1) before loading the EDID version stored in the main storage unit (200) corresponding to the at least one connector (CNT1), wherein
the loading the EDID comprises loading the EDID version selected from the plurality of EDID versions to the temporary storage unit (320).

11. The control method according to claim 10, further comprising displaying a selection item on the plurality of EDID versions to be selected by the user selection unit (400).

## Patentansprüche

1. Anzeigeeinrichtung (1), die Folgendes umfasst:
einen Port, der so eingerichtet ist, dass er mit mehreren Verbindern (CNT1-CNT3) verbindbar ist, die jeweils mit wenigstens einer Videosignalversorgungsquelle gekoppelt sind;
eine nichtflüchtige Hauptspeicherungseinheit (200), die mehrere Extended Display Identification Data (erweiterte Anzeigeidentifizierungsdaten), EDIDs, darin speichert, wobei die mehreren EDIDs jeweils den mehreren Verbindern (CNT1-CNT3) entsprechen;
eine flüchtige temporäre Speicherungseinheit (320); und eine Steuerung (600),
wobei die Steuerung (600) zu Folgendem konfiguriert ist:
Laden der mehreren EDIDs aus der Hauptspeicherungseinheit (200) in die temporäre Speicherungseinheit (320), wenn die Anzeigeeinrichtung (1) mit Leistung versorgt wird,
Empfangen von EDID-Anforderungssignalen von externen Videosignalversorgungsquellen durch Verbinder (CNT1, CNT2), die mit dem Port verbunden sind, unter den mehreren Verbindern (CNT1-CNT3), und
Steuern eines Arbiters (330) zum Übertragen der EDID, die den verbundenen Verbindern (CNT1, CNT2) entsprechen, unter den EDIDs, die in die temporäre Speicherungseinheit (320) geladen sind, an die externen Videosignalversorgungsquellen durch die verbundenen Verbinder (CNT1, CNT2), wobei, falls die EDID-Anforderungssignale im Wesentlichen gleichzeitig bereitgestellt werden, der Arbiter (330) die Signale sequenziell verarbeitet.

2. Anzeigeeinrichtung (1) nach Anspruch 1, wobei die Steuerung (600) zum Empfangen von Leistung von der Anzeigeeinrichtung (1) und/oder wenigstens einem der Verbinder (CNT1-CNT3) eingerichtet ist.

3. Anzeigeeinrichtung (1) nach Anspruch 1 oder 2, wobei die mehreren EDIDs, die in der Hauptspeicherungseinheit (200) gespeichert sind, durch eine Schnittstelle (210, 310) einschließlich eines I2C-Ports oder eines RS232-Ports an die temporäre Speicherungseinheit (320) übertragen werden.

4. Anzeigeeinrichtung (1) nach einem der vorhergehenden Ansprüche, wobei die Hauptspeicherungseinheit (200) mehrere EDID-Versionen darin speichert, die wenigstens einem der Verbinder (CNT1-CNT3) entsprechen, wobei die Anzeigeeinrichtung (1) ferner Folgendes umfasst:
eine Benutzerauswahleinheit (400), die zum Auswählen einer der mehreren EDID-Versionen bereitgestellt ist.

5. Anzeigeeinrichtung (1) nach Anspruch 4, die ferner eine Benutzerschnittstelleneinstellungseinheit (500) umfasst, die einen Auswahlgegenstand über die mehreren EDID-Versionen, die durch die Benutzerauswahleinheit (400) auszuwählen sind, anzeigt.

6. Anzeigeeinrichtung (1) nach Anspruch 4 oder 5, wobei die Steuerung (600) die EDID-Version, die durch die Benutzerauswahleinheit (400) ausgewählt ist, unter den mehreren EDID-Versionen, die dem wenigstens einen Verbinder (CNT1-CNT3) entsprechen, aus der Hauptspeicherungseinheit (200) in die temporäre Speicherungseinheit (320) lädt.

7. Steuerverfahren für eine Anzeigeeinrichtung (1), die einen Port, der mit mehreren Verbindern (CNT1-CNT3) verbindbar ist, die jeweils mit Videosignalversorgungsquellen gekoppelt sind, eine nichtflüchtige Hauptspeicherungseinheit (200), die mehrere Extended Display Identification Data, EDIDs, der Anzeigeeinrichtung (1) speichert, wobei die mehreren EDIDs jeweils den mehreren Verbindern (CNT1-CNT3) entsprechen, und eine flüchtige temporäre Speicherungseinheit (320) aufweist, wobei das Steuerverfahren Folgendes umfasst:
Laden der mehreren EDIDs aus der Hauptspeicherungseinheit (200) in die temporäre Speicherungseinheit (320), wenn die Anzeigeeinrichtung (1) mit Leistung versorgt wird;
Empfangen von EDID-Anforderungssignalen von externen Videosignalversorgungsquellen durch Verbinder (CNT1, CNT2), die mit dem Port gekoppelt sind, unter den mehreren Verbindern (CNT1-CNT3);
Übertragen, durch einen Arbiter (330), der EDIDs, die den verbundenen Verbindern (CNT1, CNT2) entsprechen, unter den EDIDs, die in die temporäre Speicherungseinheit (320) geladen sind, an die externen Videosignalversorgungsquelle durch die verbundenen Verbinder (CNT1, CNT2);
falls die EDID-Anforderungssignale im Wesentlichen gleichzeitig bereitgestellt werden, sequenzielles Verarbeiten der Signale durch den Arbiter (330).

8. Steuerverfahren nach Anspruch 7, das Empfangen von Leistung von der Anzeigeeinrichtung (1) und/oder wenigstens einem der Verbinder (CNT1-CNT3) umfasst.

9. Steuerverfahren nach Anspruch 7, wobei die EDIDs, die in der Hauptspeicherungseinheit (200) gespeichert sind, durch eine Schnittstelle (210, 310) einschließlich eines I2C-Ports oder eines RS232-Ports an die temporäre Speicherungseinheit (320) übertragen werden.

10. Steuerverfahren nach Anspruch 7, das ferner, falls mehrere EDID-Versionen in der Hauptspeicherungseinheit (200) gespeichert sind, welche wenigstens einem Verbinder (CNT1) entsprechen, Auswählen einer der mehreren EDID-Versionen durch eine Benutzerauswahleinheit (400) der Anzeigeeinrichtung (1) vor dem Laden der EDID-Version, die in der Hauptspeicherungseinheit (200) gespeichert ist und die dem wenigstens einen Verbinder (CNT1) entspricht, umfasst, wobei
das Laden der EDID Laden der EDID-Version, die aus den mehreren EDID-Versionen ausgewählt ist, in die temporäre Speicherungseinheit (320) umfasst.

11. Steuerverfahren nach Anspruch 10, das ferner Anzeigen eines Auswahlgegenstands über die mehreren EDID-Versionen, die durch die Benutzerauswahleinheit (400) auszuwählen sind, umfasst.

## Revendications

1. Appareil d'affichage (1) comprenant :
un port agencé pour pouvoir être connecté à une pluralité de connecteurs (CNT1-CNT3) qui sont respectivement couplés à au moins une source de délivrance de signaux vidéo ;
une unité de mémoire principale non volatile (200) qui stocke une pluralité de données d'identification d'affichage étendu, EDID, où la pluralité des EDID correspondent respectivement à la pluralité de connecteurs (CNT1-CNT3) ;
une unité de mémoire temporaire volatile (320) ; et
un contrôleur (600),
où le contrôleur (600) est configuré pour :
charger la pluralité d'EDID de l'unité de mémoire principale (200) dans l'unité de mémoire temporaire (320) lorsque l'appareil d'affichage (1) est alimenté en courant,
recevoir des signaux de demande d'EDID provenant de sources de délivrance de signaux vidéo externes par l'intermédiaire de connecteurs (CNT1, CNT2) qui sont connectés au port parmi la pluralité de connecteurs (CNT1-CNT3), et
commander un arbitre (330) pour transmettre les EDID correspondant aux connecteurs connectés (CNT1, CNT2) parmi les EDID chargées dans l'unité de mémoire temporaire (320) aux sources de délivrance de signaux vidéo externes à travers les connecteurs connectés (CNT1, CNT2) où, si les signaux de demande d'EDID sont délivrés sensiblement simultanément, l'arbitre (330) traite les signaux en séquence.

2. Dispositif d'affichage (1) selon la revendication 1, dans lequel le contrôleur (600) est adapté pour recevoir de l'énergie depuis au moins une source parmi l'appareil d'affichage (1) et au moins l'un des connecteurs (CNT1-CNT3).

3. Dispositif d'affichage (1) selon la revendication 1 ou la revendication 2, dans lequel la pluralité des EDID stockées dans l'unité de mémoire principale (200) sont transmises à l'unité de mémoire temporaire (320) à travers une interface (210, 310) comprenant un port I2C ou un port RS232.

4. Appareil d'affichage (1) selon l'une quelconque des revendications précédentes, dans lequel l'unité de mémoire principale (200) stocke une pluralité de versions d'EDID correspondant à au moins l'un des connecteurs (CNT1-CNT3), l'appareil d'affichage (1) comprenant en outre :
une unité de sélection d'utilisateur (400) qui est pourvue pour sélectionner l'une de la pluralité de versions d'EDID.

5. Appareil d'affichage (1) selon la revendication 4, comprenant en outre une unité de réglage d'interface utilisateur (500) qui affiche un élément de sélection sur la pluralité de versions d'EDID à sélectionner par l'intermédiaire de l'unité de sélection utilisateur (400) .

6. Dispositif d'affichage (1) selon la revendication 4 ou la revendication 5, dans lequel le contrôleur (600) charge la version d'EDID sélectionnée par l'unité de sélection d'utilisateur (400) parmi la pluralité de versions d'EDID correspondant à l'au moins un connecteur (CNT1-CNT3), de l'unité de mémoire principale (200) vers l'unité de mémoire temporaire (320) .

7. Procédé de commande d'un appareil d'affichage (1) ayant un port pouvant être connecté à une pluralité de connecteurs (CNT1-CNT3) qui sont respectivement couplés à des sources de délivrance de signaux vidéo, une unité de mémoire principale non volatile (200) qui stocke une pluralité de données d'identification d'affichage étendu, EDID, de l'appareil d'affichage (1), où la pluralité d'EDID correspondent respectivement à la pluralité de connecteurs (CNT1-CNT3), et une unité de mémoire temporaire volatile (320), le procédé de commande comprenant les étapes suivantes :
charger la pluralité d'EDID de l'unité de mémoire principale (200) dans l'unité de mémoire temporaire (320) lorsque l'appareil d'affichage (1) est alimenté en courant ;
recevoir des signaux de demande d'EDID provenant de sources de délivrance de signaux vidéo externes par l'intermédiaire de connecteurs (CNT1, CNT2) qui sont couplés au port parmi la pluralité de connecteurs (CNT1-CNT3) ;
transmettre, par un arbitre (330), les EDID correspondant aux connecteurs connectés (CNT1, CNT2) parmi les EDID chargées dans l'unité de mémoire temporaire (320) à la source de délivrance de signaux vidéo externe à travers les connecteurs connectés (CNT1, CNT2) ;
si les signaux de demande d'EDID sont délivrés sensiblement simultanément, traiter les signaux en séquence par l'arbitre (330).

8. Procédé de commande selon la revendication 7, comprenant de recevoir de l'énergie depuis au moins une source parmi l'appareil d'affichage (1) et au moins l'un des connecteurs (CNT1-CNT3).

9. Procédé de commande selon la revendication 7, dans lequel les EDID stockés dans l'unité de mémoire principale (200) sont transmises à l'unité de mémoire temporaire (320) à travers une interface (210, 310) comprenant un port I2C ou un port RS232.

10. Procédé de commande selon la revendication 7, comprenant en outre, si une pluralité de versions d'EDID sont stockées dans l'unité de mémoire principale (200) correspondant à au moins un connecteur (CNT1), de sélectionner l'une de la pluralité de versions d'EDID par l'intermédiaire d'une unité de sélection d'utilisateur (400) de l'appareil d'affichage (1) avant de charger la version EDID stockée dans l'unité de mémoire principale (200) correspondant à l'au moins un connecteur (CNT1), où
le chargement des EDID comprend de charger la version d'EDID sélectionnée dans la pluralité de versions d'EDID vers l'unité de mémoire temporaire (320).

11. Procédé de commande selon la revendication 10, comprenant en outre d'afficher un élément de sélection sur la pluralité de versions d'EDID à sélectionner par l'unité de sélection d'utilisateur (400).
